# EUROPÄISCHE PATENTSCHRIFT

(11) **EP 3 094 576 B1**
(45) Veröffentlichungstag und Bekanntmachung des Hinweises auf die Patenterteilung: **25.07.2018**
(21) Anmeldenummer: 16701811.8
(22) Anmeldetag: 28.01.2016
(51) Int. Cl.: B65G 1/04, B66F 9/07

(54) **SYSTEM AUS REGALEINRICHTUNG UND KORRESPONDIEREM TELESKOPIERBAREM LASTAUFNAHMEMITTEL OHNE BREITENVERSTELLUNG**
SYSTEM FORMED BY SHELVING UNIT AND CORRESPONDING TELESCOPIC LOAD RECEIVING MEANS WITHOUT WIDTH ADJUSTMENT
SYSTEME CONSTITUE D'UN DISPOSITIF DE RAYONNAGE ET D'UN MOYEN DE RECEPTION DE CHARGE TELESCOPIQUE CORRESPONDANT SANS REGLAGE DE LARGEUR

(30) Priorität: 11.02.2015 DE 102015101948
(43) Veröffentlichungstag der Anmeldung: 23.11.2016
(73) Patentinhaber: SSI Schäfer Automation GmbH, 8051 Graz-Gösting (AT)
(72) Erfinder: WINKLER, Max, 8010 Graz (AT)
(74) Vertreter: Witte, Weller & Partner Patentanwälte mbB
(86) Internationale Anmeldenummer: PCT/EP2016/051833
(87) Internationale Veröffentlichungsnummer: WO 2016/128227

(56) Entgegenhaltungen:
- WO-A1-03/018443
- WO-A1-2004/103883
- DE-A1- 4 210 892
- JP-A- H07 101 508
- JP-A- S53 141 769
- JP-A- 2008 013 288
- US-A- 5 927 926
- US-A1- 2003 185 656

## Beschreibung

Die Erfindung betrifft eine Regaleinrichtung sowie ein Regalbediengerät mit einem Lastaufnahmemittel, die aufeinander abgestimmt sind und die jeweils eine Führungseinrichtung aufweisen, um das Lastaufnahmemittel beim Ein- und Ausfahren eines teleskopierbaren Elements in und aus der Regaleinrichtung in einer Höhenrichtung abzustützen und in einer Ein- und Ausfahrrichtung zu führen. Die Erfindung betrifft ferner ein entsprechendes System.

Das Dokument US 5,927,926 A offenbart eine Regaleinrichtung nach dem Oberbegriff des Anspruchs 1. Es offenbart nämlich ein Fahrgestell für ein Lager-und Kommissioniersystem mit Verriegelungs/Eingriffs-Gliedern.

Das Dokument DE 202 13 803 U3 offenbart eine Lagereinrichtung zum Ein- und Auslagern von Behältern oder dergleichen in ein bzw. aus einem Regal, vorzugsweise in einer Kommissionieranlage, wobei das Regal ein angekoppeltes Regalbediengerät mit einem beweglichen Lastaufnahmemittel aufweist, welches auf Fachböden des Regals abgestellt Behälter oder dergleichen in ausgerichteter Stellung zum ausgewählten Behälter bzw. Fachboden ergreift und aus dem Regal auslagert oder umgekehrt auf dem Lastaufnahmemittel angeordnete Behälter in das Regal einlagert, wobei das Lastaufnahmemittel eine im Wesentlichen horizontal aus- und einfahrbare, einen Behälter oder dergleichen gleitend untergreifende Plattform ist.

Das Dokument DE 42 10 892 A1 offenbart als Regalbediengerät ausgebildete Lastaufnahmeeinrichtungen, insbesondere für Kraftfahrzeuge in mechanischen Parkanlagen, nach Art eines Hochregallagers. Die Lastaufnahmeeinrichtungen sind je nach Gestaltung mit Zusatzeinrichtungen wie Paletten, selbstfahrenden Spezialwagen, Fahrschienen, Sonderantrieben oder dergleichen ausgestattet. Der Einsatz einer einfachen und leichten Lastaufnahmeeinrichtung ohne Zusatzeinrichtungen wird ermöglicht, wenn auf einem fahrbaren Lastträger zwei parallel liegende Teleskopgabelunterteile quer verschieblich angeordnet sind, deren jedes ein nach Bedarf in einem längs beweglichen Teleskopgabelmittelteil geführtes, gegenüber diesem teleskopierbares Teleskopgabeloberteil trägt, auf dem zwei Paare von Rollenschlitten mit lastaufnahmeseitig auskragenden Tragrollen längs verfahrbar und zur Aufnahme der Räder eines zu parkenden Kraftfahrzeugs gegeneinander verstellbar und verriegelbar sind. Die Teleskopgabeloberteile können sich je nach aufliegender Last und Teleskopierzustand unter geringfügiger, über Sensoren überwachter Neigung auf an ihren Enden angebrachten Stützrollen in der Spur des einzuparkenden Kraftfahrzeugs abstützen.

Es sind Systeme bekannt, die Regale bzw. Regaleinrichtungen aufweisen, die wiederum mit Regalbediengeräten bedient werden. Die Regale weisen übereinander und nebeneinander angeordnete Regalfächer auf, in denen Lagergüter gelagert werden. Die Lagergüter können einfachtief oder mehrfachtief in Lagerplätzen gelagert werden. Die Lagergüter werden mit Lastaufnahmemitteln eingelagert und ausgelagert. Die Lastaufnahmemittel sind auf den Regalbediengeräten angeordnet, die wiederum in einer Längsrichtung der Regale von einem Regalfach zu einem anderen Regalfach verfahrbar sind. Die Lastaufnahmemittel weisen mindestens einen, üblicherweise zwei, in einer Querrichtung des Regals ein- und ausfahrbare Greifarme auf, mit denen die Lagergüter in die Regalfächer hineinbewegt werden (Einlagerung) und aus den Regalfächern herausbewegt werden (Auslagerung). Ein derartiges System ist in den Dokumenten DE 10 2008 037 657 A1 und EP 2 669 217 A1 offenbart.

Die Greifarme kragen in einem ausgefahrenen Zustand frei, d.h. ohne Abstützung am Regal, in die Regalfächer hinein. Die dazu erforderlichen Führungen müssen einerseits die durch die Hebelwirkung verstärkten Gewichtskräfte des ausgefahrenen Arms auffangen und dabei dürfen andererseits in horizontaler Richtung nahezu kein Spiel aufweisen. Deshalb sind die Führungen der teleskopierenden Lastaufnahmemittelarme mechanisch aufwendig und kostenintensiv.

Die Lagergüter werden mit Mitnahmefingern in die Regalrächer hineingeschoben oder aus den Regalfächern herausgezogen. Die Mitnahmefinger sind üblicherweise um die Längsachse der Greifarme schwenkbar gelagert, wie es z.B. in der EP 2 669 217 A1 gezeigt ist.

Da die Lagergüter unterschiedlich breit sein können, weisen die Greifarme einen Breitenverstellmechanismus auf, so dass die Greifarme in Abhängigkeit einer Breite des Lagerguts aufeinander zu- oder voneinander wegbewegt werden können. Eine derartige Breitenverstellung ist ebenfalls in den Dokumenten DE 10 2008 037 657 A1 und EP 2 669 217 A1 gezeigt.

Üblicherweise werden die Lagergüter auf Fachböden der Regale abgestellt. Die Fachböden sind dynamisch in Lagerplätze einteilbar. Dies bedeutet, dass jedem Lagergut situativ eine Lagergut-spezifische Fläche des Fachbodens zugeordnet werden kann. Die Größe der Lagerplätze kann sich somit unterscheiden. Eine Position der Lagerplätze relativ zum Fachboden ändert sich Lagergut-spezifisch immer wieder, wodurch sich die Dynamik ausdrückt.

Ferner kann sich die Lage eines Lagerguts relativ zum zugeordneten Lagerplatz (ungewollt) im Laufe der Zeit ändern, z.B. weil sich die Regalbediengeräte am Regal abstützen und so Vibrationen von den Regalbediengeräten auf die Regale übertragen werden, die (leichte) Relativbewegungen der eigentlich statisch positionierten Lagergüter zur Folge haben. Aus diesem Grund weisen viele bekannte Lastaufnahmemittel eine Breitenverstellung auf, um die Lagerplätze grob anzufahren und die Greifarme feinabgestimmt den gelagerten Lagergütern zu nähern. Derartige Breitenverstellungen machen das Lastaufnahmemittel teuer, komplex (Sensorik/Steuerung) und schwer (zusätzliche Komponenten). Der Steuerungsaufwand für die Grob- und Feinpositionierung ist hoch. Die teleskopierbare Mechanik der Greifarme muss ausreichend stabil sein, um, insbesondere im frei auskragenden Zustand, schwere Lagergüter ein- und auszulagern.

Das Dokument JP S53 141769 A offenbart eine Regaleinrichtung für Fass-ähnliche Gegenstände. Das Dokument JP H07 101 508 A offenbart eine Transfereinrichtung. Das Dokument WO 1004/103883 A1 offenbart Teleskopschubarme.

Es ist daher eine Aufgabe der vorliegenden Erfindung, eine Regaleinrichtung und ein korrespondierendes Regalbediengerät mit einem Lastaufnahmemittel vorzusehen, die die oben beschriebenen Nachteile überwinden.

Diese Aufgabe wird gelöst durch eine Regaleinrichtung nach Anspruch 1.

Die Führungseinrichtungen der Greifarme und der Tiefenauflage sind aufeinander abgestimmt. Die Greifarme sind wegen der Führungseinrichtungen entlang den Tiefenauflagen geführt bewegbar. Die Greifarme stützen sich in einer Höhenrichtung über die Führungseinrichtungen während Einlager- und Auslagerbewegungen auf den Tiefenauflagen ab. Die Tiefenauflagen stellen also Führungs- und Abstützhilfen dar. Diese Abstützung ist im maximal ausgekragten Zustand der Greifarme von Vorteil. In dieser Situation treten die größten Hebelkräfte auf. Wenn in der maximal ausgefahrenen Stellung der Greifarme keine Hebelkräfte bzw. Drehmomente auf das Lastaufnahmemittel des Regafbediengeräts wirken, kann eine Ein- und Ausfahrmechanik der Greifarme entsprechend einfacher konstruiert und ausgelegt werden. Dies reduziert wiederum die Herstellungskosten sowie das Gewicht des Lastaufnahmemittels. Die Greifarme können aus einfacheren Materialien hergestellt werden, die eine geringere Belastbarkeit als Materialien aufweisen, die herkömmlicherweise für die Greifarme eingesetzt werden. Auf eine stabilisierende Mechanik kann verzichtet werden.

Neben der Führung in der Höhenrichtung werden die Greifarme auch in der Tiefenrichtung (d.h. der Querrichtung der Regale) der Regalfächer durch die Tiefenauflagen geführt. Auch diese Maßnahme vereinfacht die Konstruktion der Greifarme. Die Greifarme bzw. deren Bewegungsmechanismen müssen in einer Breitenrichtung der Regalfächer weniger stabil ausgelegt sein als herkömmliche Mechanismen.

Die Tiefenauflagen selbst begrenzen die Lagerplätze. Ein Verrutschen der Lagergüter innerhalb der Lagerplätze über zuvor definierte Dimensionen eines Lagerplatzes hinaus, z.B. durch Vibrationen, die von vorbeifahrenden Regalbediengeräten an die Regaleinrichtung übertragen werden, treten nicht auf.

Diese Maßnahmen ermöglichen eine Vereinfachung des Lastaufnahmemittels, was in einer erheblichen Kostenreduktion resultiert, insbesondere weil man auf einen Breitenverstellmechanismus für die Greifarme verzichten kann.

Weil die Tiefenauflagen aus den Böden vorstehen, ist eine Relativbewegung der Lagergüter begrenzt. Die Lagergüter befinden sich somit immer zuverlässig innerhalb der ihnen zugewiesenen Lagerplätze. Deshalb kann beim Lastaufnahmemittel auf eine entsprechende Sensorik verzichtet werden, die die Relativposition des Lagerguts im Regalfach bzw. auf dem Lagerplatz, insbesondere beim Auslagern, bestimmt und verifiziert.

Vorzugsweise weist die erste Führungseinrichtung ein Führungsrad bzw. Rad auf, welches drehbar im Greifarm gelagert ist, wobei jede der Tiefenauflagen eine Oberseite mit einer Nut aufweist, wobei die zweite Führungseinrichtung die Nut umfasst, in welcher das Führungsrad geführt beweglich ist.

Das Rad und die Nut sind so aufeinander abgestimmt und dimensioniert, das das Rad, vorzugsweise formschlüssig, mit einem geringen Spiel innerhalb der Nut sitzt und beweglich ist. Auf diese Weise wird sichergestellt, dass der Greifarm entlang einer gewünschten Richtung ein- und ausgefahren wird. Das Rad ermöglicht eine gute Kraftübertragung und Abstützung, selbst während einer Bewegung des Greifarms.

Alternativ und/oder ergänzend kann die erste Führungseinrichtung ein Nutenstein sein, wobei jede der Tiefenauflagen eine Oberseite mit einer Nut aufweist, wobei die zweite Führungseinrichtung die Nut umfasst, in welcher der Nutenstein gleitend beweglich ist.

Der Nutenstein stellt eine Alternative zum oben genannten Führungsrad dar, wobei der Nutenstein insbesondere gleitend in der Nut bewegt wird und nicht wie ein Rad abrollt.

Insbesondere erstreckt sich jede der Tiefenauflagen im Wesentlichen über eine gesamte Tiefe des Lagerplatzes.

"Im Wesentlichen über die gesamte Tiefe" bedeutet, dass sich die Tiefenauflage in der Tiefenrichtung über nahezu die gesamte Länge des Lagerplatzes erstreckt. Damit ist sichergestellt, dass der Greifarm während eines Ein- oder Auslagerzyklus permanent durch die Tiefenauflage gestützt und geführt ist. Der Greifarm kann sich zu keinem Zeitpunkt von einer vorgegebenen Bewegungsbahn entfernen.

Bei einer weiteren vorteilhaften Ausgestaltung weist die Regaleinrichtung ferner eine Vielzahl von Regalständern und eine Vielzahl von Böden auf, wobei die Böden entlang eines Höhenrasters mit den Regalständern verbindbar sind, und wobei jede der Tiefauflagen entlang eines Lagerplatzrasters mit jedem der Böden verbindbar ist.

Eine derartige Regaleinrichtung zeichnet sich durch eine Rahmenbauweise aus. Die Böden können in die Regalständer eingehängt und jederzeit verändert werden. Hinsichtlich einer Teilung in der Höhenrichtung können beliebige Abstände zwischen benachbarten Böden eingestellt werden. Die Größe der Lagerplätze (Breite und Tiefe) lässt sich mit Hilfe der Tiefenauflagen einfach einstellen und jederzeit ändern. Somit können Systembetreiber jederzeit flexibel auf sich ändernde Anforderungen reagieren, insbesondere wenn sich ein Artikelsortiment ändert. Eine Änderung des Artikelsortiments hat zur Folge, dass sich die Dimensionen der Lagergüter ändern. In diesem Fall können die Dimensionen der Lagerplätze entsprechend angepasst werden, indem die Tiefenauflagen neu positioniert werden. Der Betreiber muss keine neuen Regaleinrichtungen kaufen.

Dabei ist es ferner von Vorteil, wenn jeder der Böden eine Vielzahl von Schlitzen aufweist, wobei jede der Tiefenauflagen eine Vielzahl von Rastnocken aufweist, wobei die Schlitze entlang des Lagerplatzrasters angeordnet sind und wobei die Schlitze und die Rastnocken derart aneinander angepasst sind, dass die Rastnocken in den Schlitzen lösbar einrastbar sind.

Die Tiefenauflagen werden in die Schlitze gesteckt. Eine Repositionierung der Tiefenauflagen relativ zu den Böden ist problemlos möglich. Die Repositionierung kann jederzeit erfolgen. Zur Repositionierung ist kein besonderes Werkzeug erforderlich. Dennoch werden die Anforderungen an eine Führungs- und Positionierungsgenauigkeit für das Lastaufnahmemittel bzw. dessen ein- und ausfahrbare Greifarme erfüllt.

Bei einer weiteren besonderen Ausführungsform weist jede der Tiefenauflagen ein, vorzugsweise geradliniges, Schienenelement und ein, vorzugsweise keilförmiges, Einführelement auf, wobei das Einführelement regalgassenseitig bündig an das Schienenelement angrenzt und wobei sich das Einführelement hinsichtlich seiner Breite in Richtung einer Regalgasse verjüngt.

Das Einführelement unterstützt die Einlagerungen von Lagergütern. Eine mechanische Blockade der Lagergüter beim Einlagern wird verhindert. Die Keilform bzw. Schrägen des Einführelements bewirkt eine Zentrierung der einzulagernden Lagergüter in Richtung der ihnen zugewiesenen Lagerplätze. Auf eine Sensorik, die den Einlagervorgang überwacht, kann verzichtet werden. Diese ist ansonsten insbesondere aus sicherheitstechnischen Gründen relevant.

In diesem Fall weist das Schienenelement vorzugsweise eine Nut auf, wobei das Einführelement ebenfalls eine Nut aufweist, die bündig ineinander übergehen, wobei sich die Nut des Einführelements vorzugsweise in Richtung der Regalgasse verbreitert und abfällt.

Die Verjüngung der Nut des Einführelements in Richtung des Schienenelements hat eine zentrierende Wirkung für die erste Führungseinrichtung des Greifarms. Der Anstieg der Nut des Einführelements lässt eine größere Positionierungsungenauigkeit des Greifarms zu Beginn eines Ein- oder Auslagervorgangs in der Höhenrichtung zu, da durch die ansteigende Nut immer sichergestellt ist, dass die erste Führungseinrichtung des Greifarms sicher in die Nut des Schienenelements eingeleitet wird.

Vorzugsweise weist jede der Tiefenauflagen eine Breite auf, die größer als eine Breite des Greifarms ist.

Auch diese Maßnahme verhindert, dass es zu einer mechanischen Blockade einzulagernder Lagergüter kommt.

Die oben genannte Aufgabe wird ferner durch ein Einebenen-Regalbediengerät nach Anspruch 11 gelöst.

Die oben genannte Aufgabe wird außerdem gelöst durch ein System mit mindestens einer Regaieinrichtung gemäß der Erfindung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht einer Regaleinrichtung der Erfindung;
- Fig. 2: eine Draufsicht auf ein System der Erfindung;
- Fig. 3: eine perspektivische Rückansicht eines Lagerplatzes;
- Fig. 4: eine Draufsicht auf eine Tiefenauflage;
- Fig. 5: eine Seitenansicht der Tiefenauflage der Fig. 4; und
- Fig. 6: eine Schnittansicht entlang der Linie VI-VI in Fig. 5.

Wenn im Nachfolgenden von vertikalen bzw. horizontalen Orientierungen gesprochen wird, versteht es sich von selbst, dass Elemente, die mit diesen Orientierungen verknüpft sind, jederzeit durch eine entsprechende Drehung miteinander vertauscht werden können, so dass derartige Orientierungen nicht einschränkend zu verstehen sind. Des Weiteren sind gleiche Teile und Merkmale mit gleichen Bezugszeichen versehen. Die in der Beschreibung enthaltenen Offenbarungen sind sinngemäß auf Teile und Merkmale mit ähnlichen Bezugszeichen übertragbar. Lage- und Orientierungsangaben (z.B. "oben ", "unten", "seitlich", "längs", "horizontal", "vertikal" oder Ähnliches) sind auf die unmittelbar beschriebene Figur bezogen. Bei einer Änderung der Lage oder Orientierung sind diese Angaben sinngemäß auf die neue Lage bzw. Orientierung zu übertragen.

Wie in der (Intra-)Logistik üblich werden im nachfolgend beschriebenen Lager- und Kommissioniersystem bzw. System 40 (Distributionsanlagen, Materialhandhabungsanlagen, etc.) eine Längsrichtung mit "X", eine Querrichtung mit "Z" und eine Höhenrichtung mit "Y" bezeichnet. Die Richtungen X, Y und Z definieren vorzugsweise ein kartesisches Koordinatensystem.

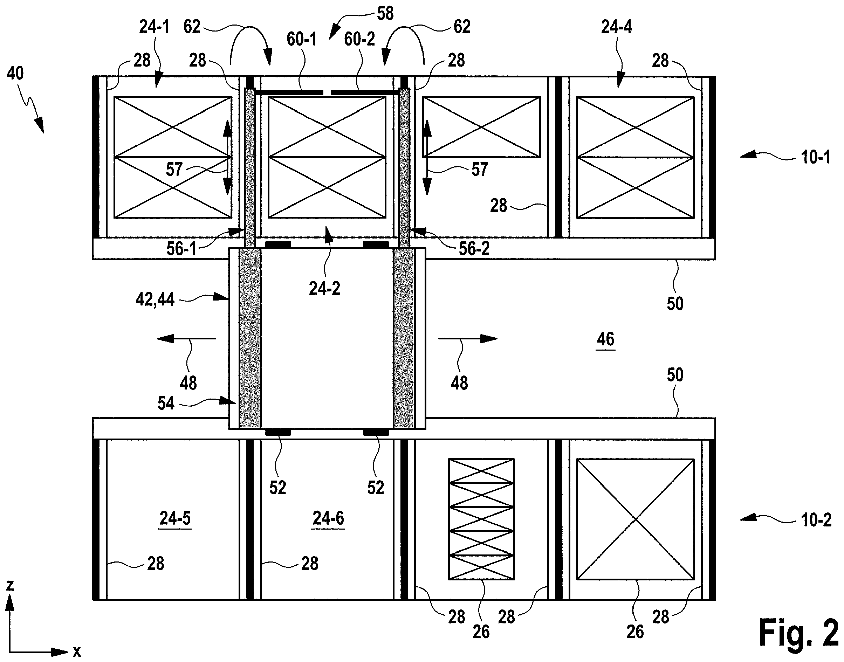

Unter einer Lageranordnung bzw. einer Regalanordnung wird nachfolgend eine Vielzahl von Regalen 12 verstanden, die meist parallel in Form von Einzelregalen oder Doppelregalen angeordnet sind. Doppelregale sind Einzelregale, die Rücken an Rücken aufgestellt sind. Die Regale 12, die nachfolgend auch als Regaleinrichtungen 10 bezeichnet werden, erstrecken sich im Wesentlichen in der Längsrichtung X. Regalgassen 46 (siehe Fig. 2) verlaufen parallel zu den Regalen 12 und erstrecken sich quer zwischen den Regalen 12. Die Regalgassen 46 dienen als Aktionsraum für Regalbediengeräte 42. Die Regale 12 enden an sich jeweils gegenüberliegenden (kurzen) Stirnseiten, die wiederum in einer Ebene senkrecht zur Längsrichtung X bzw. zu den (langen) Längsseiten der Regale 12 und zu den Regalgassen 46 orientiert sind. Die Regale 12 selbst weisen eine Vielzahl von Lagerplätzen 24 auf, die in übereinanderliegenden Regalebenen RE angeordnet sind. Eine Regalzeile erstreckt sich in der horizontalen Richtung innerhalb eines Lagers und weist üblicherweise viele Regalfächer 22 übereinander und nebeneinander auf.

Unter einem Lagergut 26 wird nachfolgend eine Lager- und/oder Kommissioniereinheit innerhalb des Lager- und Kommissioniersystems 40 verstanden. Das Lagergut 26 kann ein Lagerladehilfsmittel sowie einen Artikel umfassen. Das Lagergut 26 kann aber auch nur den Artikel umfassen, wenn man das Lagerladehilfsmittel weglässt. Als (Lager-)Lade-hilfsmittel werden z.B. Paletten, Gitterboxen, Container, Behälter, Kartons, Tablare oder Ähnliches eingesetzt. Unter einem "Artikel" ist insbesondere ein Stückgut zu verstehen. Die Artikel sind durch einen Artikeltyp unterscheidbare (kleinste) Einheiten eines Artikelsortiments. Stückgüter sind individualisierte, unterscheidbare Artikel, die einzeln gehandhabt werden können und deren Bestand stückweise oder als Gebinde (case) geführt wird. Ein "Gebinde" ist ein allgemeiner Begriff für eine handhabbare Einheit, die manuell oder mittels technischem Geräts (z.B. Fördertechnik, Regalbediengerät, Lastaufnahmemittel, etc.) bewegt werden kann. Die Begriffe "Artikel", "Gebinde", "Lagergut 26", "Lagereinheit", "Gebinde" und "Stückgut" werden nachfolgend gleichwertig verwendet.

Die Begriffe "Regalplatz", "Lagerplatz 24" und "Stellplatz" werden nachfolgend äquivalent benutzt. Mit diesen "Plätzen" sind Orte innerhalb des Systems 40 gemeint, wo die Artikel bevorratet sind. Ein "Regalplatz" bzw. ein "Lagerplatz 24" ist ein Ort, wo die Artikel innerhalb der Regaleinrichtung 10, auch langfristig, zum Zwecke einer Kommissionierung bereitgehalten werden. Eine Lagerplatzverwaltung wird üblicherweise durch eine hier nicht näher gezeigte und thematisierte Kommissioniersteuerung durchgeführt. Die Kommissioniersteuerung ist üblicherweise durch eine Datenverarbeitungsanlage realisiert, die vorzugsweise zur verzögerungsfreien Datenübertragung und Datenverarbeitung im Online-Betrieb arbeitet. Die Kommissioniersteuerung kann eine zentrale oder dezentrale Struktur aufweisen. Die Kommissioniersteuerung kann modular aufgebaut sein und folgende Funktionen implementieren: Auftragsverwaltung, Umsetzung von Kommissionierleitstrategien, Warenwirtschaftssystem, Materialfluss, Lagerplatzverwaltung, Schnittstellen-Verwaltung und Ähnliches. Diese Funktionen werden in Form von Software und/oder Hardware implementiert.

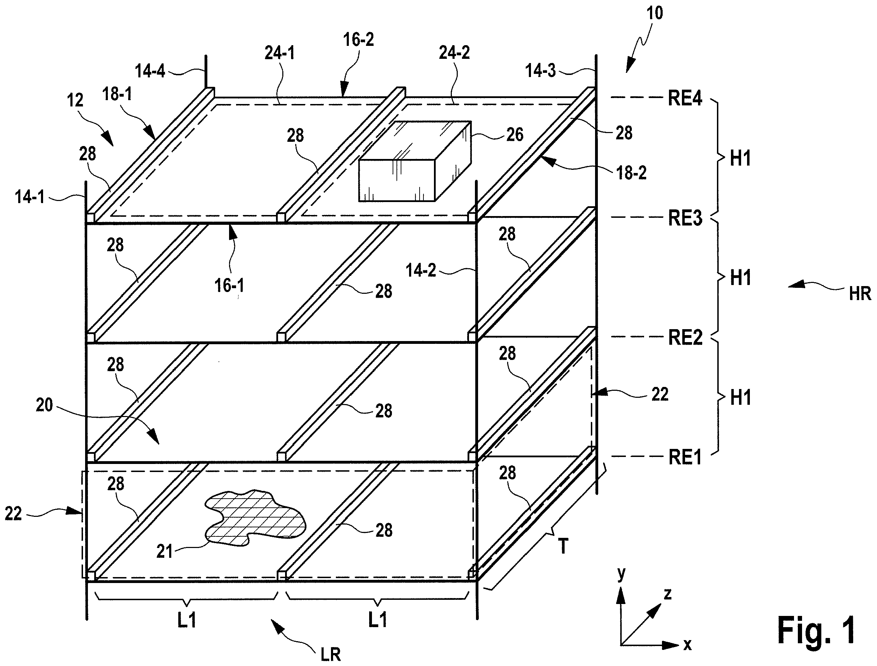

Fig. 1 zeigt eine perspektivische Darstellung einer Regaleinrichtung 10 der Erfindung. Die gezeigte Regaleinrichtung 10 umfasst ein Regal 12, das z.B. in einer Rahmenbauweise strukturiert ist. Die hier exemplarisch in Rahmenbauweise ausgebildete Regaleinrichtung 10 weist (Regal-)Ständer 14, (Längs-)Traversen 16 und (Quer-)Traversen 18 auf. Optional können (Regal-)Böden 20 vorgesehen sein, die in die Traversen 16 und/oder 18 eingehängt werden oder auf diese gelegt werden. Die Böden 20 müssen keine durchgehende Fläche aufweisen. Die Böden 20 können z.B. in Form von wasserdurchlässigen Gitterrosten 21 ausgebildet sein. Die Böden 20 können auch allein durch mehrere parallel zueinander angeordnete Traversen 16 und/oder 18 ausgebildet werden.

In der Fig. 1 sind exemplarisch vier Böden 20 übereinander gezeigt, wobei der unterste Boden 20 des Regals 12, der eine erste Regalebene RE1 definiert, als Gitterrost 21 ausgebildet ist und wobei die restlichen Böden 20 der Regalebenen RE2-RE4 als (durchgehende flächige) Fachböden ausgebildet sind, wie man sie von konventionellen Fachbodenregalen kennt. Die Böden 20 können in hier nicht näher gezeigte und bezeichnete Rastnasen einhängbar sein, die an den Ständern 14 angebracht sind. Diese Rastnasen sind derart beabstandet zueinander angeordnet, dass sie ein Höhenraster HR definieren. In der Fig. 1 sind die Regalebenen RE1-RE4 in der Höhenrichtung Y gleich mit einem Abstand H1 zueinander beabstandet.

In der Fig. 1 sind auch vier Regalfächer 22 gezeigt, wobei das unterste Regalfach 22 mit einer Strichlinie verdeutlicht ist. Die Regalfächer 22 definieren einen Raum oberhalb der Böden 20.

Jedes der Regalfächer 22 kann eine Vielzahl von Lagerplätzen 24 aufweisen. In der Fig. 1 weist jedes der vier übereinander angeordneten Regalfächer 22 jeweils einen ersten (linken) Lagerplatz 24-1 und einen zweiten (rechten) Lagerplatz 24-2 auf, die in der Fig. 1 lediglich für den obersten Boden 20 in Form von Strichlinien angedeutet sind. Die Lagerplätze 24 dienen zur Lagerung von jeweils einem oder mehreren Lagergütern 26 (einfach- oder mehrfachtiefe Lagerung). In der Fig. 1 ist exemplarisch ein einziges Lagergut 26 im Lagerplatz 24-2 in der obersten Regalebene RE4 gezeigt. Die Lagerplätze 24 stellen jeweils eine Fläche dar, auf der eines oder mehrere der Lagergüter 26 abstellbar sind. Diese Lagergüter 26 werden datentechnisch den eingelagerten oder einzulagernden Lagerplätzen 24 zugeordnet.

Jeder der Lagerplätze 24 wird seitlich in der Längsrichtung X des Regals 12 durch mindestens eine Tiefenauflage 28 begrenzt, die nachfolgend noch näher erläutert wird. Die Tiefenauflagen 28 können leistenförmig ausgebildet sein und erstrecken sich in der Fig. 1 in der Querrichtung Z des Regals 12. Zwischen diese Tiefenauflagen 28 können dann wiederum Böden 20 nebeneinander eingelegt werden, d.h. die Böden 20 werden von den Tiefenauflagen 28 getragen und nicht direkt von den Traversen 16 und/oder 18. Die Lagerplätze 24 sind vorzugsweise jeweils zwischen zwei in der Längsrichtung X benachbarten Tiefenauflagen 28 definiert. In der Fig. 1 sind die benachbarten Tiefenauflagen 28 mit einem Abstand L1 zueinander beabstandet. Die Lagerplätze 24 der Fig. 1 weisen also jeweils eine "Breite" L1 sowie eine Tiefe "T" auf. Die "Breiten" der Lagerplätze 24 können ein Lagerplatzraster LR definieren. Es versteht sich, dass die Lagerplätze 24 unterschiedlich breit sein können. So könnte das unterste Regalfach 22 der Fig. 1 z.B. auch in vier unterschiedlich breite Lagerplätze 24 unterteilt sein (nicht gezeigt). Aus Gründen einer einfacheren Beschreibung werden nachfolgend einheitlich dimensionierte Lagerplätze 24 betrachtet.

Fig. 2 zeigt eine Draufsicht auf ein System 40 der Erfindung, das eine oder mehrere Regaleinrichtungen 10 aufweist. Beim System 40 kann es sich um Lager- und Kommissioniersystem handeln, wie eingangs beschrieben. Das System 40 weist exemplarisch zwei Regaleinrichtungen 10-1 und 10-2 auf, die entlang der Längsrichtung X orientiert sind und die eine Regalgasse 46 zwischen sich definieren, in welcher ein Regalbediengerät 42 beweglich ist. Das Regalbediengerät 42 ist exemplarisch als ein Einebenen-Regalbediengerät bzw. Shuttle 44 (hier ohne Hubfunktion) implementiert. Es versteht sich, dass andere Regalbediengerättypen eingesetzt werden können. Das Shuttle 44 bewegt sich entlang der Pfeile 48 in der Regalgasse 46. Das Shuttle 44 stützt sich auf Laufschienen 50 ab, die an den Regaleinrichtungen 10-1 angebracht sind. Die Laufschienen 50 sind vorzugsweise in Höhe jeder der Regalebenen RE angebracht. Das Shuttle 44 stützt sich mit seinen Laufrädern 52 an den Regaleinrichtungen 10 bzw. den Laufschienen 50 ab.

Das Regalbediengerät 42 bzw. das Shuttle 44 weist mindestens ein Lastaufnahmemittel 54 auf. Das Lastaufnahmemittel 54 weist mindestens einen Greifarm 56 auf, der teleskopierbar in der Querrichtung Z ausgefahren und eingefahren werden kann. Das Shuttle 44 weist zwei parallel zueinander angeordnete Greifarme 56-1 und 56-2 auf, die in der Fig. 2 in einem (maximal) ausgefahrenen Zustand gezeigt sind, in welchem die Greifarme 56 in die Regaleinrichtung 10-1 hineinreichen, um dort gelagerte Lagergüter 26 auszulagern. In der Fig. 2 reichen die Greifarme 56 in den zweiten Lagerplatz 24-2 der Regaleinrichtung 10-1 hinein.

Das Lastaufnahmemittel 54 weist ferner eine oder mehrere Greifeinrichtungen 58 auf, die exemplarisch in Form von schwenkbar an den Greifarmen 56 gelagerten Fingern 60 implementiert sind. Eine Schwenkbewegung der Finger 60-1 und 60-2 erfolgt z.B. um die Querrichtung Z und ist in der Fig. 2 mittels Pfeilen 62 angedeutet. Die Finger 60-1 und 60-2 sind vorzugsweise so lange ausgebildet, dass sie in ihrem aktivierten Zustand, der in der Fig. 2 gezeigt ist, eine Breite des Lagerplatzes 24-2 vorzugsweise nahezu vollständig überdecken. Lange Finger 60 haben den Vorteil, dass unterschiedlich dimensionierte Lagergüter 26 in vorzugsweise einheitlich ausgebildeten und dimensionierten Lagerplätzen 24 an beliebigen Relativpositionen abstellbar sind, ohne Gefahr zu laufen, die abgestellten Lagergüter 26 nicht wieder auslagern zu können.

In der Fig. 2 sind die Finger 60-1 und 60-2 hinter dem hinteren Lagergut 26 des Lagerplatzes 24-2 positioniert. Die Finger 60 sind an äußeren Enden der Greifarme 56 positioniert. Weiter innen liegende Finger 60 (nicht gezeigt) können zusätzlich vorgesehen werden. Wenn die Greifarme 56 eingefahren werden, d.h. sich entlang der Pfeile 57, die die Teleskopierbewegungen der Greifarme 56 verdeutlichen, in Richtung des Shuttles 44 bewegen, ziehen die Finger 60, die im Lagerplatz 24-2 gelagerten Lagergüter 26 auf eine hier nicht näher bezeichnete Transportplattform des Shuttles 44, die sich zwischen den Greifarmen 56 befindet. Es versteht sich, dass weitere unterstützende Elemente (z.B. eine zentrale ausfahrbare Plattform) vorgesehen sein können, um ein vertikales Verkanten der Lagergüter 26 beim Transferieren vom Lagerplatz 24 auf das Shuttle 44 zu verhindern. Diese zusätzlichen Elemente können ebenfalls in der Querrichtung Z teleskopierbar ausgeführt sein und können zwischen den beiden Greifarmen 56-1 und 56-2 angeordnet sein.

Ferner versteht es sich, dass ein Einlagerungsvorgang ähnlich abläuft. In der Fig. 2 nicht näher gezeigte und bezeichnete weitere Finger 60 können an einem Endabschnitt der Greifarme 56 vorgesehen sein, der dem Endabschnitt gegenüberliegt, wo die Finger 60-1 und 60-2 gezeigt sind. Mit diesen zusätzlichen Fingern 60 können die Lagergüter 26 vom Shuttle 44 in die Lagerplätze 24 hineingeschoben werden. Einzelne Lagergüter können aus einem mehrfach belegten Lagerplatz 24 ausgelagert werden.

Außerdem versteht es sich, dass die gerade eben erläuterten Schub- und Ziehbewegungen nur eine exemplarische Art eines Transfers der Lagergüter 26 zwischen dem Shuttle 44 und den Lagerplätzen 24 darstellen. Wenn die Lagergüter 26 z.B. hängend gelagert werden, ist das Lastaufnahmemittel 54 üblicherweise mit einer Hubfunktion ausgestattet, um die hängenden Lagergüter ein- und auszuhängen. In diesem Fall sind die Greifarme 56 ebenfalls in der Querrichtung Z teleskopierbar ausgebildet, weisen jedoch alternative Greifeinrichtungen (z.B. Haken, Nocken, oder Ähnliches) auf, um die Lagergüter 26 hängend in die Lagerplätze 24 ein- und auszulagern.

Das in der Fig. 2 gezeigte Lastaufnahmemittel 54 ist ebenfalls lediglich exemplarischer Natur. Es versteht sich, dass das Lastaufnahmemittel 54 an einen Typ des Lagerplatzes 24 angepasst ist. Wenn der Lagerplatz 24 bspw. einen (nicht gezeigten) Rippenboden aufweist, wobei die Lagergüter 26 auf entsprechenden Rippen abgestellt werden, könnten die Greifarme 56 alternativ durch teleskopierbare Zinken ausgebildet, die in Zwischenräume zwischen benachbarten Rippen ein- und ausfahren können.

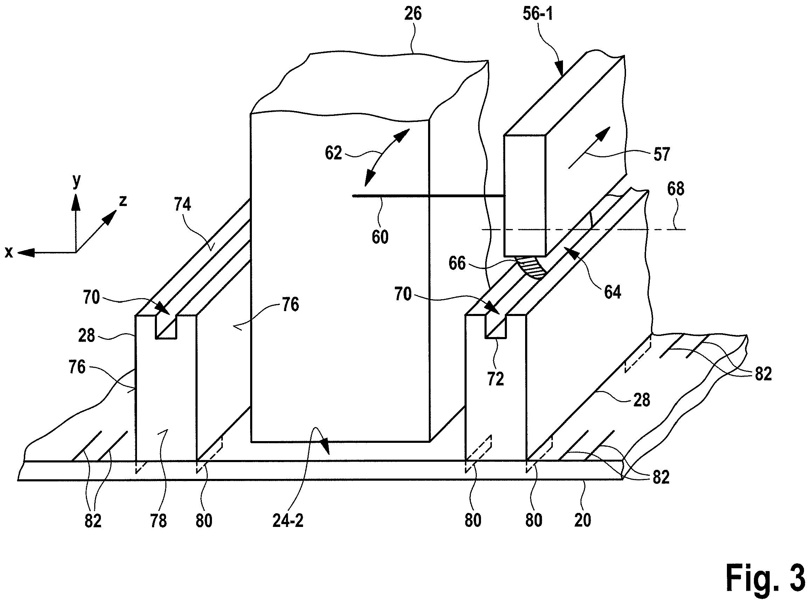

Fig. 3 zeigt einen Auslagerungsvorgang in perspektivischer Darstellung, wobei man von "hinten" auf den Lagerplatz 24-2 der Fig. 2 blickt. Vereinfachend ist nur ein einziger Greifarm 56-1 mit einem aktivierten Finger 60 gezeigt, der entlang des Pfeils 62 um die Z-Achse in seine aktive Stellung verschwenkt ist. Der Greifarm 56-1 ist soweit ausgefahren, dass der Finger 60 hinter das auszulagernde Lagergut 26 reicht, um das Lagergut 26 durch ein Einfahren des Greifarms 56-1 in Richtung des (nicht dargestellten) Regalbediengeräts 42 zu bewegen, wie es durch den Pfeil 57 in Fig. 3 angedeutet ist.

Der Greifarm 56-1 weist eine erste Führungseinrichtung 64 auf. Die Führungseinrichtung 64 weist exemplarisch ein (Führungs-)Rad 66 auf, welches im oder am Greifarm 56-1 gelagert ist. Das Rad 66 ist um eine Drehachse 68 (angetrieben oder antriebslos) drehbar. Die Achse 68 ist parallel zur Längsrichtung bzw. Achse X des Regals 12 orientiert.

Allgemein gilt, dass zumindest einer der Greifarme 56 die erste Führungseinrichtung 64 aufweist. Vorzugsweise weist jeder der Greifarme 56 eine eigene erste Führungseinrichtung 64 auf.

In der perspektivischen Detailansicht der Fig. 3 sind zwei der Tiefenauflagen 28 genauer gezeigt. Die Tiefenauflagen 28 begrenzen den Lagerplatz 24-2 seitlich in der Längsrichtung X. Die Tiefenauflagen 28 definieren den Lagerplatz 24-2 zwischen sich. Die Tiefenauflagen 28 stehen aus dem Boden 20 in der Höhenrichtung Y vor. Dadurch verhindern die Tiefenauflagen 28, dass ein eingelagertes Lagergut 26 unbeabsichtigt und ungewollt von einem der Lagerplätze 24 (seitlich) in X in einen der anderen Lagerplätze 24 verrutscht.

Jede der Tiefenauflagen 28 weist eine zweite Führungseinrichtung 70 auf, die korrespondierend zu der ersten Führungseinrichtung 64 der Greifarme 56 ausgebildet ist. Im Beispiel der Fig. 3 ist die zweite Führungseinrichtung 70 als Nut 72 in der Oberseite 74 der Tiefenauflage 28 ausgebildet. Die Nut 72 erstreckt sich in der Längsrichtung der Tiefenauflage 28. In der Fig. 3 erstreckt sich die Nut 72 parallel zur Querrichtung Z. Die Nut 72 stellt eine Vertiefung in der Oberseite 74 dar. Die Dimensionen der Nut 72 sind so gewählt, dass die Führungsräder 66 der ersten Führungseinrichtung 64, vorzugsweise mit einem sehr geringen Spiel, entlang der Nut 72 beweglich sind, wie durch den Pfeil 57 in Fig. 3 angedeutet. In der Fig. 3 sind die hier nicht näher bezeichneten Breiten der Nut 72 und des Rads 66 aufeinander abgestimmt, um den Greifarm 56 möglichst linear, d.h. ohne Spiel in der Richtung X, entlang der Nut 72 zu bewegen. Die Nut 72 könnte auch in einer seitlichen Wand bzw. Seite 76 der Tiefenauflage 28 vorgesehen sein.

Die Nuten 72 in den Tiefenauflagen 28 der Fig. 3 sind endseitig offen ausgebildet, d.h. die Nut 72 erstreckt sich bis zu einer Stirnseite 78 der Tiefenauflagen 28. Die Nut 72 kann endseitig geschlossen ausgebildet sein, um zu verhindern, dass die Greifarme 56 in gegenüberliegende Regalgasse 46 aufgefahren werden. Die Tiefenauflagen 28 können leistenförmig ausgebildet sein und jeweils seitliche Seiten 76 aufweisen, die mechanische Anschläge für die Lagergüter 26 darstellen.

An einer hier nicht näher bezeichneten Unterseite der Tiefenauflagen 28 können ein oder mehrere Rastnocken 80 vorgesehen sein, die in entsprechend ausgebildete Schlitze 82 in den Böden 20 steckbar sind. Die Böden 20 weisen in diesem Fall vorzugsweise eine Vielzahl von Schlitzen 82 auf, die entlang des Lagerplatzrasters LR (vgl. Fig. 1) verteilt angeordnet sind. In der Fig. 3 sind die Rastnocken 80 mit Strichlinien angedeutet.

Es versteht sich, dass die Tiefenauflagen 28 auch einstückig mit den Böden 20 ausgebildet sein können. Ferner versteht es sich, dass die Tiefenauflagen 28 auch auf eine andere Art und Weise als in der Fig. 3 mit den Böden 20 verbunden werden können. Die Tiefenauflagen 28 können z.B. auf die Böden 20 geklebt oder mit den Böden 20 verschweißt werden oder die Tiefenauflagen 28 können die Böden 20 tragen. Die in der Fig. 3 gezeigte Steckverbindung hat den Vorteil, dass die Breite der Lagerplätze 24 jederzeit geändert werden kann, um kurzfristig auf neue Systemanforderungen zu reagieren. Die Tiefenauflagen 28 könnten z.B. auch in korrespondierend ausgebildete Nut-Federverbindungen (nicht gezeigt) in die Böden 20 eingeschoben werden.

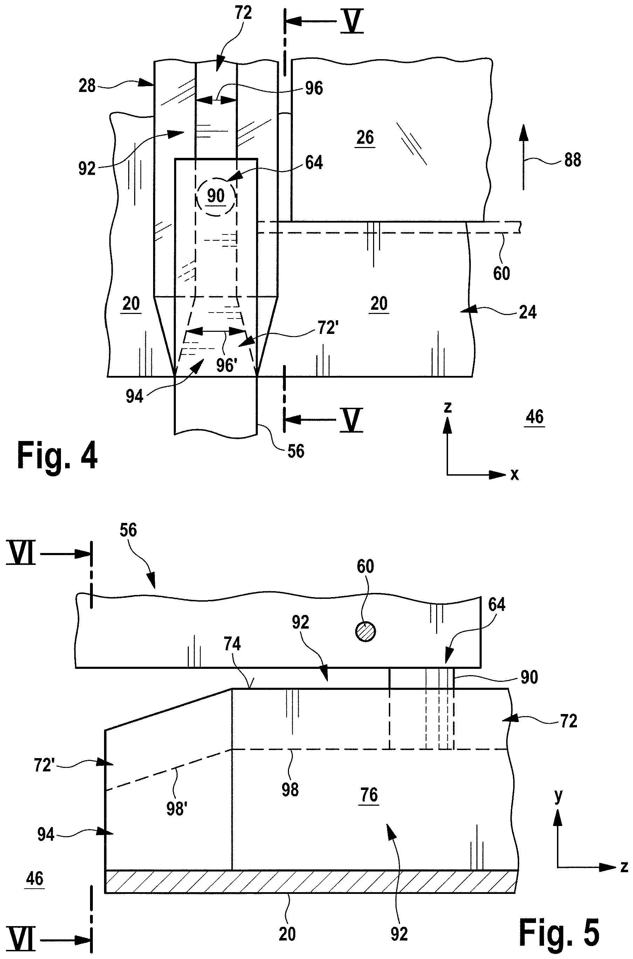

Unter gemeinsamer Bezugnahme auf die Figuren 4 und 5 werden nachfolgend mögliche Abwandlungen und/oder Ergänzungen der Führungseinrichtungen 64 und 70 sowie der Tiefenauflage 28 erläutert.

Fig. 4 zeigt eine Draufsicht auf einen Teil eines Lagerplatzes 24, wobei die dargestellte Tiefenauflage 28 zusätzlich an ihrem gassenseitigen Ende ein optionales Einführelement 94 aufweist. Fig. 5 zeigt eine teilweise geschnittene Ansicht der Fig. 4 entlang der Linie V-V in Fig. 4. Die erste Führungseinrichtung 64 ist als Nutenstein 90 implementiert, der gleitend in der Nut 72 der Führungseinrichtung 70 der Tiefenauflage 28 in der Querrichtung Z beweglich ist. Die Figuren 4 und 5 zeigen einen Einlagerungsvorgang, bei dem der Finger 60 das Lagergut 26 entlang eines Pfeils 88 in den Lagerplatz 24 hineinschiebt.

Die in den Figuren 4 und 5 gezeigte Tiefenauflage 28 weist ein geradliniges Schienenelement 92 und ein eingangsseitig dazu vorgesehenes Einführelement 94 auf, welches keilförmig ausgebildet ist. Das keilförmige Einführelement 94 schließt sich regalgassenseitig bündig an das Schienenelement 92 an. Das Einführelement 94 verjüngt sich in Richtung der Regalgasse 46. Das Einführelement 94 ist vorzugsweise symmetrisch ausgebildet. Das Einführelement 94 setzt die Nut 72 des Schienenelements 92 entlang der Querrichtung Z fort. Die Nut 72 des Schienenelements 92 schließt bündig an eine Nut 72' des Einführelements 94 an. Die Nut 72 des Schienenelements 92 weist eine einheitliche Nutbreite 96 auf. Eine Nutbreite 96' der Nut 72' des Einführelements 94 nimmt in Richtung der Regalgasse 46 vorzugsweise zu. Eine hier nicht näher gezeigte und bezeichnete Höhe des Einführelements 94 nimmt in Richtung der Regalgasse 46 vorzugsweise ab, wohingegen eine Höhe des Schienenelements 92 vorzugsweise konstant ist.

Ähnliches gilt für einen Nutboden 98 bzw. 98'. Der Nutboden 98 des Schienenelements 92 geht bündig in den Nutboden 98' des Einführelements 94 über. Der Nutboden 98 des Einführelements 94 fällt vorzugsweise in Richtung der Regalgasse 46 ab.

Das Einführelement 94 schließt in Richtung der Regalgasse 46 vorzugsweise bündig mit dem Boden 20 ab.

Das Einführelement 94 sorgt während der Einführbewegung (siehe Pfeil 88) dafür, dass das einzulagernde Lagergut 26 nicht mit der Tiefenauflage 28 kollidiert. Die hier nicht näher bezeichneten seitlichen Flanken des Einführelements 94, die in die seitlichen Seiten 76 des Schienenelements 92 (Fig. 3) übergehen, führen das einzulagernde Lagergut 26 während der Bewegung (siehe Pfeil 88) entlang der Querrichtung Z in den Lagerplatz 24 hinein. Auf diese Weise wird vermieden, dass das Lagergut 26 beim Einlagern an die Stirnseite 78 (vgl. Fig. 3) der Tiefenauflage 28 stößt und dort eine mechanische Blockade hervorruft.

Aufgrund von Trägheit kann es passieren, dass das einzulagernde Lagergut 26 in der Richtung X gegen den Greifarm 56 rutscht, während das Shuttle 44 (mit größerer Geschwindigkeit) in X innerhalb der Regalgasse 46 fährt bzw. angehalten wird. Es kann dann zu einer Situation kommen, dass das einzulagernde Lagergut 26 während der Einführbewegung (siehe Pfeil 88) sowohl am Greifarm 56 als auch am Finger 60 anliegt. Die Keilform des Einführelements 94 leitet das einzulagernde Lagergut 26 automatisch in der Richtung X von der Tiefenauflage 28 weg, so dass mechanische Blockaden vermieden werden. Die Vermeidung der mechanischen Blockade erfolgt also ohne eine Relativverstellung der Greifarme 56 in der X-Richtung.

Die sich konisch verjüngende Nutbreite 96' des Einführelements 94 erleichtert die Einführung des Nutensteins 90 in die Spur 72 bzw. 72'. Die Positionierung des Shuttles 44 relativ zum Lagerplatz 24 kann also mit einer gewissen Ungenauigkeit, d.h. grob, in der Richtung X erfolgen, ohne dass die Auskragbewegung des Greifarms 56 erschwert oder verhindert wird. Die sich verjüngende Nutbreite 96' zentriert den Nutenstein 90 in der X-Richtung während der Einführbewegung (siehe Pfeil 88). Ähnliches gilt für den Nutboden 98' des Einführelements 94. Der Nutboden 98' steigt in der Z-Richtung auf das Niveau des Nutbodens 98 des Schienenelements 92 an. Der Nutboden 98' führt den Nutenstein 90, also in der Höhenrichtung Y auf das Niveau der Nut 72 des Schienenelements 92.

Der Nutenstein 90 ist im Beispiel der Figuren 4 und 5 gleitend geführt. Der Nutenstein 90 ist aus einem entsprechenden Material gebildet. Der Nutenstein 90 stützt den Greifarm 56 während der Einführbewegung (siehe Pfeil 88) in der Höhenrichtung Y ab. Natürlich führt der Nutenstein 90 den Greifarm 56 auch in der X-Richtung bzw. sorgt für eine Zentrierung des Greifarms 56 in der X-Richtung.

Es versteht sich, dass die im Zusammenhang mit den Figuren 4 und 5 für den Nutenstein 90 beschriebenen Wirkungen auch für jede andere Ausführungsform der ersten Führungseinrichtungen 64 und 70 gelten, wie z.B. für das in der Fig. 3 gezeigte Führungsrad 66 und die Nut 72.

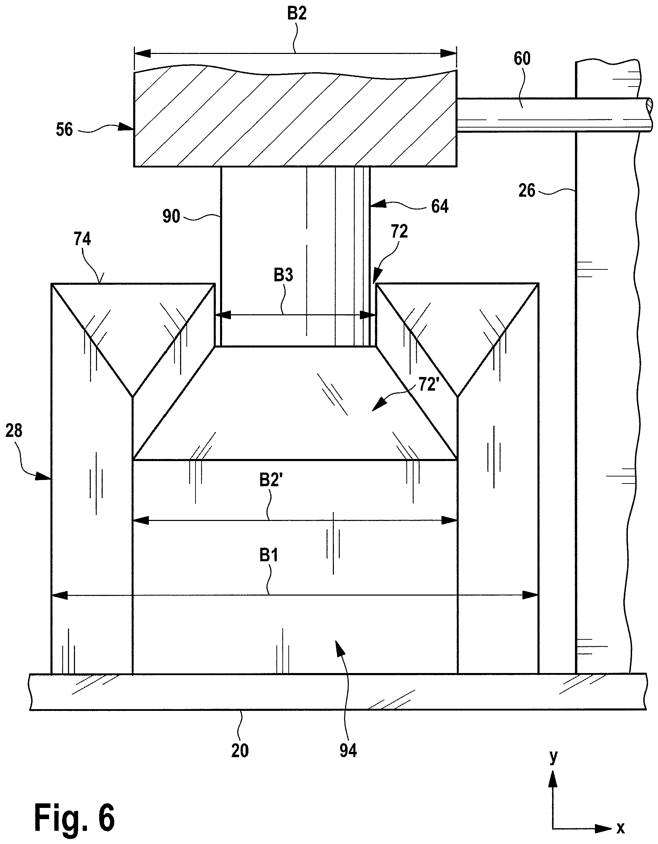

Fig. 6 zeigt eine Schnittansicht entlang der Linie VI-VI der Fig. 5. Fig. 6 dient der Verdeutlichung der Breiten B, der ersten Führungseinrichtung 64, der Nut 72, des Schienenelements 92 sowie des Einführelements 94 in der X-Richtung des Regals 12.

Die (effektive) Breite B1 des Schienenelements 92 bzw. des Einführelements 94 ist größer als die Breite B2 des Greifarms 56, damit sich das Lagergut 26 beim Einführen in den Lagerplatz 24 nicht zwischen dem Shuttle 44 und der Tiefenauflage 28 verkeilen kann. Die Nutbreite B2' der Nut 72' im Einführelement 94 sollte maximal so groß wie die Breite B2 des Greifarms 56 sein. Die Breite B3 der ersten Führungseinrichtung 64, hier des Nutensteins 90, sollte in etwa so groß wie die Nutbreite 96 (vgl. Fig. 4) der Nut 72 des Schienenelements 92 sein. Die Breite B3 des Nutensteins 90 sollte leicht kleiner als die Nutbreite 96 sein, damit der Nutenstein 90 in der X-Richtung ein kleines Spiel hat. Der Nutenstein 90 ist an seinem unteren Ende vorzugsweise ballig ausgebildet, um die Haft- und Gleitreibung so gering wie möglich zu halten.

### Bezugszeichenliste:

- 10: Regaleinrichtung
- 12: Regal
- 14: (Regal-)Ständer
- 16: (Längs-)Traverse
- 18: (Quer-)Traverse
- 20: (Regal-)Boden
- 21: Gitterrost
- 22: Regalfach (Strichlinie)
- H1: Höhe von 22
- HR: Höhenraster
- 24: Lagerplatz
- T: Tiefe von 24
- L: Länge von 24
- LR: Lagerplatzraster LR
- 26: Lagergut
- RE: Regalebene
- 28: Tiefenauflage, leistenförmig
- 40: System
- 42: Regalbediengerät
- 44: Shuttle
- 46: Regalgasse
- 48: Bewegung von 44
- 50: Laufschienen
- 52: Laufräder
- 54: Lastaufnahmemittel (LAM)
- 56: Greifarme
- 57: Bewegung von 56
- 58: Greifeinrichtung
- 60: Finger
- 62: Bewegung von 60
- 64: 1. Führungseinrichtung
- 66: (Führungs-)Rad
- 68: (Dreh-)Achse
- 70: 2. Führungseinrichtung
- 72: Nut
- 74: Oberseite von 28
- 76: seitliche Wand bzw. Seite von 28
- 78: Stirnseite von 28
- 80: Rastnocke
- 82: Schlitze in 20
- 88: Pfeil (Einführbewegung)
- 90: Nutenstein
- 92: Schienenelement, geradlinig
- 94: Einführelement, keilförmig
- 96: Nutbreite
- 98: Nutboden

## Patentansprüche

1. Regaleinrichtung (10) zur Ein- und Auslagerung von Lagergütern (26) in und aus Regalfächern (22), wobei die Ein- und Auslagerung automatisiert mittels eines Regalbediengeräts (42) erfolgt, wobei das Regalbediengerät (42) ein Lastaufnahmemittel (54) mit mindestens einem Greifarm (56) aufweist, wobei der Greifarm (56) in einer Tiefenrichtung (Z) der Regalfächer (22) bewegbar ist und eine Greifeinrichtung (58) aufweist, um die Lagergüter (26) in einer aktiven Stellung der Greifeinrichtung (58) entlang der Tiefenrichtung (Z) in die Regalfächer (22) hinein zu bewegen und aus den Regalfächern (22) heraus zu bewegen, wobei die Regaleinrichtung (10) eine Vielzahl von Regalfächern (22) aufweist, wobei jedes der Regalfächer (22) einen Boden (20) und mindestens zwei Tiefenauflagen (28) aufweist, die sich entlang der Tiefenrichtung (Z), erstrecken und die in einer Längsrichtung (X) der Regalfächer (22) beabstandet zueinander angeordnet sind und dadurch einen Lagerplatz (24) zwischen sich definieren; **dadurch gekennzeichnet, dass** der Greifarm (56) eine erste Führungseinrichtung (64) aufweist und dass jede der Tiefenauflagen (28) eine zweite Führungseinrichtung (70) aufweist, die sich in der Tiefenrichtung (Z) erstreckt und die konfiguriert ist, mit der ersten Führungseinrichtung (64) des Greifarms (56) derart zusammenzuwirken, dass der Greifarm (56) während einer Ein- oder Auslagerung über die Führungseinrichtungen (64, 70) mit der Tiefenauflage (28) in Kontakt steht und in der Tiefenrichtung (Z) geführt entlang der Tiefenauflage (28) bewegbar ist, wobei jede der Tiefenauflagen (28) in einer Höhenrichtung (Y) aus dem Boden (20) des Regalfachs (22) vorsteht, um die Lagergüter (26) seitlich innerhalb des Lagerplatzes (24) zu halten.

2. Regaleinrichtung (10) nach Anspruch 1, wobei die erste Führungseinrichtung (64) ein Führungsrad (66) aufweist, welches drehbar im Greifarm (56) gelagert ist, und wobei jede der Tiefenauflagen (28) eine Oberseite (74) mit einer Nut (72) aufweist, wobei die zweite Führungseinrichtung (70) die Nut (72) aufweist, in welcher das Führungsrad (66) geführt beweglich ist.

3. Regaleinrichtung (10) nach Anspruch 1, wobei die erste Führungseinrichtung (64) ein Nutenstein (90) ist und wobei jede der Tiefenauflagen (28) eine Oberseite (74) mit einer Nut (72) aufweist, wobei die zweite Führungseinrichtung (70) die Nut (72) aufweist, in welcher der Nutenstein (90) gleitend beweglich ist.

4. Regaleinrichtung (10) nach einem der Ansprüche 1 bis 3, wobei sich jede der Tiefenauflagen (28) über eine gesamte Tiefe des Lagerplatzes (24) erstreckt.

5. Regaleinrichtung (10) nach einem der Ansprüche 1 bis 4, die ferner eine Vielzahl von Regalständern (14) und eine Vielzahl von Böden (20) aufweist, wobei die Böden (20) entlang eines Höhenrasters (HR) mit den Regalständern (14) verbindbar sind, und wobei jede der Tiefauflagen (28) entlang eines Lagerplatzrasters (LR) mit jedem der Böden (20) verbindbar ist.

6. Regaleinrichtung (10) nach Anspruch 5, wobei jeder der Böden (20) eine Vielzahl von Schlitzen (82) aufweist, wobei jede der Tiefenauflagen (28) eine Vielzahl von Rastnocken (80) aufweist, wobei die Schlitze (82) entlang des Lagerpiatzrasters (LR) angeordnet sind und wobei die Schlitze (82) und die Rastnocken (80) derart aneinander angepasst sind, dass die Rastnocken (80) in den Schlitzen (82) lösbar einrastbar sind.

7. Regaleinrichtung (10) nach einem der Ansprüche 1 bis 6, wobei jede der Tiefenauflagen (28) ein Schienenelement (92) und ein Einführelement (94) aufweist, wobei das Einführelement (94) regalgassenseitig bündig an das Schienenelement (92) angrenzt und wobei sich das Einführelement (94) in Richtung einer Regalgasse (46) verjüngt.

8. Regaleinrichtung (10) nach Anspruch 7, wobei das Schienenelement eine Nut (72) aufweist und wobei das Einführelement (94) eine Nut (72') aufweist, die bündig ineinander übergehen.

9. Regaleinrichtung nach Anspruch 8, wobei die Nut (72') des Einführelements (94) sich in Richtung der Regalgasse (46) verbreitert und abfällt.

10. Regaleinrichtung (10) nach einem der Ansprüche 1 bis 9, wobei jede der Tiefenauflagen (28) eine Breite (B1) aufweist, die größer als eine Breite (B2) des Greifarms (56) ist.

11. System (40) mit mindestens einer Regaleinrichtung (10) nach einem der Ansprüche 1 bis 10 und mit einem Regalbediengerät (42) mit einem Lastaufnahmemmittel (54).

## Claims

1. A rack device (10) for storing and retrieving storage goods (26) in and from rack compartments (22), wherein the storage and retrieval is performed automatically by means of a storage and retrieval device (42), wherein the storage and retrieval device (42) comprises a load-handling device (54) having at least one gripping arm (56), wherein the gripping arm (56) is moveable in a depth direction (Z) of the rack compartments (22) and comprises a gripping device (58) for moving the storage goods (26), in an active position of the gripping device (58), along the depth direction (Z) into the rack compartments (22) and out of the rack compartments (22), wherein the rack device (10) comprises a plurality of rack compartments (22), wherein each of the rack compartments (22) comprises a shelf (20) and at least two depth supports (28) extending along the depth direction (Z) and being arranged distanced to each other in a longitudinal direction (X) of the rack compartments (22) and thereby defining a storage location (24) therebetween;
characterizd in that the gripping arm (56) comprises a first guiding device (64) and that each of the depth supports (28) comprises a second guiding device (70), which extends in the depth direction (Z) and which is configured to cooperate with the first guiding device (64) of the gripping arm (56) such that the gripping arm (56), during storage or retrieval, is in contact with the depth support (28) via the guiding devices (64, 70) and is moveable in the depth direction (Z) in a guided manner along the depth support (28), wherein each of the depth supports (28) projects from the shelf (20) of the rack compartment (22) in a height direction (Y) for holding the storage goods (26) laterally within the storage location (24).

2. The rack device (10) of claim 1, wherein the first guiding device (64) comprises a guiding wheel (66) being supported rotatably on the gripping arm (56), and wherein each of the depth supports (28) comprises a top side (74) having a groove (72), wherein the second guiding device (70) comprises the groove (72) in which the guiding wheel (66) is moveable in a guided manner.

3. The rack device (10) of claim 1, wherein the first guiding device (64) is a groove cam (90), and wherein each of the depth supports (28) includes a topside (74) having a groove (72), wherein the second guiding device (70) includes the groove (72), in which the groove cam (90) is moveable in a sliding manner.

4. The rack device (10) of any of claims 1 to 3, wherein each of the depth supports (28) extends throughout an overall depth of the storage location (24).

5. The rack device (10) of any of claims 1 to 4 further comprising a plurality of rack posts (14) and a plurality of shelves (20) comprises, wherein the shelves (20) are connectable to the rack posts (14) along a height grid (HR), and wherein each of the depth supports (28) is connectable to each of the shelves (20) along a storage-location grid (LR).

6. The rack device (10) of claim 5, wherein each of the shelves (20) includes a plurality of slots (82), wherein each of the depth supports (28) comprises a plurality of locking cams (80), wherein the slots (82) are arranged along a storage-location grid (LR), and wherein the slots (82) and the locking cams (80) are adapted to each other such that the locking cams (80) are releasibly lockable in the slots (82).

7. The rack device (10) of any of claims 1 to 6, wherein each of the depth supports (28) comprises a rail element (92) and an inserting element (94), wherein the inserting element (94) is arranged flush adjacent to the rail element (92) at an rack-aisle side, and wherein the inserting element (94) tapers towards a rack aisle (46).

8. The rack device (10) of claim 7, wherein the rail element has a groove (72), and wherein the inserting element (94) comprises a groove (72') transitioning flushly into each other.

9. The rack device of claim 8, wherein the groove (72') of the inserting element (94) broadens and descends towards the rack aisle (46).

10. The rack device (10) of any of claims 1 to 9, wherein each of the depth supports (28) comprises a width (B1) being greater than a width (B2) of the gripping arm (56).

11. A system (40) including at least one rack device (10) of any of claims 1 to 10, and a storage and retrieval device (42) having a load-handling device (54).

## Revendications

1. Système de transstockage (10) pour introduire et sortir des produits à stocker (26) dans des rayonnages (22) et hors de ceux-ci, l'introduction et la sortie s'effectuant de manière automatisée au moyen d'un transstockeur (42), le transstockeur (42) présentant un moyen de réception de la charge (54) comprenant au moins un bras de préhension (56), le bras de préhension (56) pouvant être déplacé dans une direction en profondeur (Z) des rayonnages (22) et présentant un dispositif de préhension (58) pour déplacer les produits à stocker (26), dans une position active du dispositif de préhension (58), le long de la direction en profondeur (Z) dans les rayonnages (22) et pour les ressortir des rayonnages (22), le système de transstockage (10) présentant une pluralité de rayonnages (22), chacun des rayonnages (22) présentant une base (20) et au moins deux traverses de support (28) qui s'étendent le long de la direction en profondeur (Z) et qui sont disposées à distance l'une de l'autre dans une direction longitudinale (X) des rayonnages (22) et qui définissent ainsi entre elles un emplacement de stockage (24) ;
**caractérisé en ce que** le bras de préhension (56) présente un premier dispositif de guidage (64) et **en ce que** chacune des traverses de support (28) présente un deuxième dispositif de guidage (70) qui s'étend dans la direction en profondeur (Z) et qui est configuré pour coopérer avec le premier dispositif de guidage (64) du bras de préhension (56) de telle sorte que le bras de préhension (56), pendant une introduction et une sortie, soit en contact par le biais du dispositif de guidage (64, 70) avec la traverse de support (28) et puisse être déplacé le long de la traverse de support (28) en étant guidé dans la direction en profondeur (Z), chacune des traverses de support (28) faisant saillie dans une direction en hauteur (Y) depuis la base (20) du rayonnage (22) afin de retenir les produits à stocker (26) latéralement à l'intérieur de l'emplacement de stockage (24).

2. Système de transstockage (10) selon la revendication 1, dans lequel le premier dispositif de guidage (64) présente une roue de guidage (66) qui est supportée de manière rotative dans le bras de préhension (56), et dans lequel chacune des traverses de support (28) présente un côté supérieur (74) avec une rainure (72), le deuxième dispositif de guidage (70) présentant la rainure (72) dans laquelle la roue de guidage (66) peut être déplacée de manière guidée.

3. Système de transstockage (10) selon la revendication 1, dans lequel le premier dispositif de guidage (64) est un coulisseau (90) et dans lequel chacune des traverses de support (28) présente un côté supérieur (74) avec une rainure (72), le deuxième dispositif de guidage (70) présentant la rainure (72) dans laquelle le coulisseau (90) est déplacé de manière glissante.

4. Système de transstockage (10) selon l'une quelconque des revendications 1 à 3, dans lequel chacune des traverses de support (28) s'étend sur toute la profondeur de l'emplacement de stockage (24).

5. Système de transstockage (10) selon l'une quelconque des revendications 1 à 4, qui présente en outre une pluralité de pieds de rayonnages (14) et une pluralité de bases (20), les bases (20) pouvant être connectées aux pieds de rayonnages (14) par le biais d'une trame verticale (HR), chacune des traverses de support (28) pouvant être connectée à chacune des bases (20) le long d'une trame d'emplacement de stockage (LR).

6. Système de transstockage (10) selon la revendication 5, dans lequel chacune des bases (20) présente une pluralité de fentes (82), chacune des traverses de support (28) présentant une pluralité de cames d'encliquetage (80), les fentes (82) étant disposées le long de la trame d'emplacement de stockage (LR) et les fentes (82) et les cames d'encliquetage (80) étant adaptées les unes aux autres de telle sorte que les cames d'encliquetage (80) puissent être encliquetées de manière amovible dans les fentes (82).

7. Système de transstockage (10) selon l'une quelconque des revendications 1 à 6, dans lequel chacune des traverses de support (28) présente un élément de rail (92) et un élément d'introduction (94), l'élément d'introduction (94), du côté de l'allée de rayonnage, étant adjacent en alignement avec l'élément de rail (92) et l'élément d'introduction (94) se rétrécissant dans la direction d'une allée de rayonnage (46).

8. Système de transstockage (10) selon la revendication 7, dans lequel l'élément de rail présente une rainure (72) et dans lequel l'élément d'introduction (94) présente une rainure (72'), lesquelles se prolongent l'une dans l'autre en alignement.

9. Système de transstockage selon la revendication 8, dans lequel la rainure (72') de l'élément d'introduction (94) s'élargit et descend dans la direction de l'allée de rayonnage (46).

10. Système de transstockage (10) selon l'une quelconque des revendications 1 à 9, dans lequel chacune des traverses de support (28) présente une largeur (B1) qui est supérieure à une largeur (B2) du bras de préhension (56).

11. Système (40) comprenant au moins un système de transstockage (10) selon l'une quelconque des revendications 1 à 10 et un transstockeur (42) comprenant un moyen de réception de charge (54).
